# EUROPÄISCHE PATENTSCHRIFT

(11) **EP 0 777 067 B1**
(45) Veröffentlichungstag und Bekanntmachung des Hinweises auf die Patenterteilung: **11.06.1997**
(21) Anmeldenummer: 96104267.8
(22) Anmeldetag: 18.03.1996
(51) Int. Cl.: F16G 11/02

(54) **Verbindungsstück an einem Drahtseilende**
Cable end connector
Pièce de liaison d'extrémité de câble

(43) Veröffentlichungstag der Anmeldung: 04.06.1997
(73) Patentinhaber: Brugg Drahtseil AG, CH-5242 Birr (CH)
(72) Erfinder: Schneider, Eduard, 5426 Lengnau (CH)
(74) Vertreter: Steudtner, Werner, Dipl.-Ing.

(56) Entgegenhaltungen:
- EP-A- 0 619 443
- EP-A- 0 672 844
- DE-U-29 503 399
- FR-A- 1 197 581
- GB-A- 405 784
- US-A- 2 901 822

## Beschreibung

Die Erfindung bezieht sich auf ein metallisches Verbindungsstück an einem Drahtseilende zur Aufnahme von durch Längsspannungen im Drahtseil verursachten Zugkräften mit äusseren Abmassen in Richtung quer zur verlängerten Achse des Drahtseilendes, die im wesentlichen gleich dem Durchmesser des Drahtseils sind, wobei das Verbindungsstück auf seiner dem Drahtseilende zugewandten Seite mit einer Ausnehmung zur Aufnahme des Drahtseilendes und auf seiner vom Drahtseilende abgewandten Seite mit Verbindungsmitteln zur lösbaren Verbindung des Verbindungsstückes mit Mitteln zur Aufnahme von durch Längsspannungen im Drahtseil verursachten Zugkräften versehen ist sowie auf ein Verfahren zur Herstellung des Verbindungsstückes.

Verbindungsstücke dieser Art sind u.a. aus der EP-A-0619443 bekannt. Sie werden hauptsächlich in Bereichen eingesetzt, in denen Verbindungsstück und Drahtseil durch Durchführungen mit nahezu dem Drahtseildurchmesser entsprechenden Durchmessern von Pfosten, Trägern, Rahmen usw. gezogen werden müssen, die beispielsweise Teile von Geländern, Brüstungen oder Umzäunungen sind.

Diese bekannten Verbindungsstücke haben sich in der Praxis gut bewährt und sind im allgemeinen den gestellten Anforderungen wie z.B. der Verhinderung von durch Wind verursachten Schwingungen der Drahtseile und daraus resultierenden Lärmbelästigungen gerecht geworden, da Querschwingungen der Drahtseile in den Durchführungen wegen der nahezu gleichen Durchmesser von Durchführungen und Drahtseilen kaum mehr möglich sind. Auch Scherwirkungen auf die Drahtseile an den Oeffnungsrändern der Durchführungen konnten mit Hilfe der bekannten Verbindungsstücke mit nahezu gleichem Durchmesser wie dem der Drahtseile und der damit gegebenen Möglichkeit von Durchführungen mit ebenfalls nahezu dem gleichen Durchmesser wie dem der Drahtseile weitgehend vermieden werden.

In speziellen Fällen von extrem hohen Belastungen von mit Verbindungsstücken der eingangs genannten Art versehenen Drahtseilen, wie sie beispielsweise bei schlagartigen Querbelastungen der Drahtseile eines Drahtseil-Zaunes durch Aufprall grösserer Massen auftreten, wären jedoch Verbindungsstücke der eingangs genannten Art mit einer näherungsweise an die Bruchlast des Drahtseiles herankommenden Bruchlast der Anschlussstelle Verbindungsstück-Drahtseil wünschenswert, die in Bezug auf die Bruchlast an dieser Anschlussstelle die bekannten Verbindungsstücke der eingangs genannten Art wesentlich übertreffen. In diesem Sinne wurde bei dem aus der EP-A-0672844 bekannten Verbindungsstück der eingangs genannten Art an einem Drahtseilende der Versuch unternommen, das Drahtseilende stumpf an das Verbindungsstück anzuschweissen oder hartanzulöten. Verbindungsstücke dieser Art haben zwar direkt an der Schweiss- bzw. Lötstelle recht hohe Festigkeiten, aber in unmittelbarer Nachbarschaft der Schweiss- bzw. Lötstelle wird das angeschweisste bzw. hartangelötete Drahtseil ausgeglüht, so dass sich unmittelbar neben der Schweiss- bzw. Lötstelle in bekannter Weise eine Schwachstelle von wesentlich geringerer Festigkeit als der der Schweiss- bzw. Lötstelle und insbesondere auch von wesentlich geringerer Festigkeit als der der nicht ausgeglühten Drähte des Drahtseiles ergibt und die Anschlussstelle Verbindungsstück-Drahtseil infolge dieser der Schweiss- bzw. Lötstelle benachbarten Schwachstelle im Drahtseil dann nur eine um einiges geringere Bruchlasten als andere bekannte Verbindungsstücke der eingangs genannten Art aufweist. Zwar liesse sich dieses Ausglühen des Drahtseiles in unmittelbarer Nachbarschaft der Verbindungsstelle zwischen den stumpf aneinander grenzenden Enden von Drahtseil und Verbindungsstück theoretisch dadurch verhindern, dass man das Drahtseilende und das Verbindungsstück nicht durch Schweissen oder Hartlöten sondern durch eine Klebverbindung miteinander verbindet, aber praktische Erfahrungen mit Klebverbindungen anstelle von durch Schweissen oder Hartlöten hergestellten Verbindungen haben gezeigt, dass Klebverbindungen bei ähnlichen Festigkeiten wie denen von durch Schweissen oder Hartlöten hergestellten Verbindungen ausserordentlich spröde sind und daher Biegewechselbelastungen, wie sie an solchen Anschlussstellen Verbindungsstück-Drahtseil auftreten, nicht standhalten und dass Klebverbindungen, die nicht so spröde sind und daher den auftretenden Biegewechselbelastungen standhalten würden, eine wesentlich geringere Festigkeit als diejenige von durch Schweissen oder Hartlöten hergestellten Verbindungen aufweisen. In der Praxis lässt sich daher mit dem aus der EP-A-0672844 bekannten Verbindungsstück an einem Drahtseilende die besagte wünschenswerte Erhöhung der Bruchlast der Anschlussstelle Verbindungsstück-Drahtseil nicht erreichen, sondern es ist dort vielmehr eher mit einer verringerten Bruchlast gegenüber den anderen bekannten Verbindungsstücken der eingangs genannten Art an einem Drahtseilende zu rechnen. Nachteilig ist bei den aus der EP-A-0672844 bekannten Verbindungsstücken an einem Drahtseilende ferner, dass das Schweissen bzw. Hartlöten des Drahtseilendes an das Verbindungsstück in der Regel eine Nachbearbeitung zur Beseitigung von überstehenden Resten an der Schweiss- bzw. Lötstelle erfordert und dass Schweissbzw. Lötstellen in aller Regel nicht völlig gleichmässig ausgeführt werden können und in ästhetischer Hinsicht daher unansehnlich wirken.

Die der Erfindung zugrundeliegende Aufgabe war daher, ein Verbindungsstück der eingangs genannten Art an einem Drahtseilende zu schaffen, das gegenüber den bekannten Verbindungsstücken der eingangs genannten Art eine wesentlich erhöhte Bruchlast aufweist.

Erfindungsgemäss wird das bei einem Verbindungsstück der eingangs genannten Art an einem Drahtseilende dadurch erreicht, dass das Verbindungsstück mindestens in seinem mit der Ausnehmung versehenen Bereich derart plastisch verformt ist, dass die äusseren Abmasse des Verbindungsstückes in diesem Bereich quer zur Achse des Drahtseilendes infolge der plastischen Verformung so weit reduziert sind, dass sie mit einer Toleranz von weniger als 10% dem Durchmesser des Drahtseils entsprechen, und dass weiter die Wand der Ausnehmung mindestens auf einem Teil ihrer Länge infolge der plastischen Verformung eine der Aussenfläche des von der Ausnehmung aufgenommenen Drahtseilendes entsprechende Struktur aufweist.

Hauptvorteil des vorliegenden Verbindungsstückes an einem Drahtseilende ist, dass es eine ausserordentlich hohe Bruchkraft hat, die nahe an die vorgeschriebene minimale Seilbruchkraft herankommt, da die Wand der Ausnehmung infolge der plastischen Verformung eine der Aussenfläche des von der Ausnehmung aufgenommenen Drahtseilendes entsprechende Struktur aufweist, und dass es auch den bei Schwingungen des Drahtseiles auftretenden hohen Biegewechselbelastungen auf die Dauer gut standhält und darüber hinaus mit nur wenigen Verfahrensschritten und dementsprechend geringem Kostenaufwand herstellbar ist. Da sich bei der plastischen Verformung des mit der Ausnehmung versehenen Bereiches eine Verlängerung desselben um bis zu 25 bis 50% ergibt, können ferner beim Herstellungsverfahren kürzere Verbindungsstück-Rohlinge verwendet werden, was zu einem geringeren Materialaufwand führt.

Bei einer bevorzugten Ausführungsform des vorliegenden Verbindungsstückes weist die Wand der Ausnehmung auf dem überwiegenden Teil ihrer Länge infolge der plastischen Verformung eine der Aussenfläche des von der Ausnehmung aufgenommenen Drahtseilendes entsprechende Struktur auf. Dies hat den Vorteil eines entsprechend längeren Eingriffes zwischen Drahtseil und Verbindungsstück und entsprechend höheren, vom Drahtseil auf das Verbindungsstück übertragbaren Zugkräften.

Mit besonderem Vorteil kann die Wand der Ausnehmung infolge der plastischen Verformung weitgehend formschlüssig an der Aussenfläche des Drahtseilendes anliegen. Dadurch können ausserordentlich hohe Zugkräfte vom Drahtseilende auf das Verbindungsstück übertragen werden.

Vorteilhaft können die äusseren Abmasse des Verbindungsstückes in Richtung quer zur verlängerten Achse des Drahtseilendes mit einer Toleranz von weniger als 8%, zweckmässig von weniger als 6% und vorzugsweise von weniger als 4%, dem Durchmesser des Drahtseiles entsprechen. Der Vorteil einer solchen möglichst weitgehenden Annäherung der Durchmesser von Verbindungsstück und Drahtseil aneinander ist eine Optimierung der Halterung des Drahtseils in Durchführungen mit nahezu dem Drahtseildurchmesser entsprechender Oeffnungsweite.

Zweckmässig kann das Verbindungsstück wenigstens über die Gesamtlänge der Ausnehmung und vorzugsweise darüber hinaus über wenigstens einen Teil eines Uebergangsbereiches zwischen dem mit der Ausnehmung und dem mit den genannten Verbindungsmitteln versehenen Teil des Verbindungsstückes plastisch verformt sein. Die plastische Verformung lässt sich bekanntlich daran feststellen, dass die Kristallstruktur z.B. von im Schliff rechteckiger Form der Kristalle in Richtung einer Parallelogrammform verzerrt ist. Diese Verzerrungen im Kristallgefüge haben bekanntlich den Vorteil einer wesentlichen Erhöhung der Festigkeit der plastisch verformten Bereiche.

Der Metallquerschnitt des Verbindungsstückes an der Stelle seines Minimums sollte zweckmässig mindestens 90%, vorzugsweise über 95% des Metallquerschnittes des Drahtseiles betragen. In den Metallquerschnitt des Verbindungsstückes sind dabei natürlich auch die Querschnittsteile mit einzubeziehen, die sich durch Anpassung der Wand der Ausnehmung infolge der plastischen Verformung an die Struktur der Aussenfläche des Drahtseilendes ergeben. Der Vorteil eines möglichst grossen Metallquerschnittes des Verbindungsstückes an der Stelle seines Minimums ist eine möglichst hohe Bruchkraft an dieser Stelle des Metallquerschnittminimums, wobei aber natürlich die generelle Voraussetzung erfüllt sein muss, dass der Durchmesser des Verbindungsstückes mit einer Toleranz von weniger als 10% dem Durchmesser des Drahtseiles entspricht.

Vorteilhaft kann die minimale Bruchkraft des Verbindungsstückes über 85%, zweckmässig über 90% und vorzugsweise über 95% der minimalen Bruchkraft des Drahtseiles betragen. Das hat den Vorteil, dass die Bruchbelastbarkeit des Drahtseiles mit dem bzw. den Verbindungsstücken an seinen Drahtseilenden ausserordentlich hoch ist und damit auch ein maximaler Schutz gegen einen solchen Bruch gewährleistet ist.

Mit besonderem Vorteil kann das vorliegende Verbindungsstück aus Edelstahl, vorzugsweise aus Chrom-Nickel-Stahl, bestehen. Ein besonders vorteilhaftes Ausführungsbeispiel zeichnet sich dabei dadurch aus, dass der Edelstahl einen Chromgehalt von 15 bis 25 Gew.%, vorzugsweise von 17 bis 19 Gew.%, einen Nickelgehalt von 5 bis 15 Gew.%, vorzugsweise von 8 bis 11 Gew.%, und einen Schwefelgehalt von unter 0,036 Gew.%, vorzugsweise im Bereich von 0,015 bis 0,03 Gew.%, hat und vorzugsweise einen oder mehrere weitere Legierungsbestandteile aus der Gruppe Silizium, Mangan, Molubdän und Vanadium mit Gehalten im Bereich von 0,5 bis 5 Gew.% aufweist. Ein solcher Edelstahl hat den wesentlichen Vorteil einer besonders guten plastischen Verformbarkeit bei relativ hoher und sich durch die plastische Verformung noch weiter erhöhender Festigkeit.

Der Durchmesser des von der Ausnehmung aufgenommenen Drahtseilendes kann vorteilhaft infolge eines verringerten Luftvolumens pro Längeneinheit geringer, zweckmässig um über 5% und vorzugsweise um über 10% geringer, als der Durchmesser des Drahtseiles sein. Die Verringerung des Luftvolumens innerhalb des Drahtseilendes ergibt sich dabei während der plastischen Verformung der Wand der das Drahtseilende aufnehmenden Ausnehmung infolge des bei dieser plastischen Verformung auf das Drahtseilende ausgeübten Querdruckes und eines entsprechenden Nachgebens der Drähte des Drahtseilendes an den Stellen der Lufteinschlüsse im Drahtseilende. Der Vorteil eines solchen verringerten Durchmessers des Drahtseilendes ist eine entsprechend grössere Wandstärke der Wand der das Drahtseilende aufnehmenden Ausnehmung und damit eine entsprechende Erhöhung der Bruchkraft in diesen Wandbereichen.

Mit besonderem Vorteil kann die Ausnehmung im Anschluss an ihren das Drahtseilende aufnehmenden Teil mit einer Verlängerung von geringerem Durchmesser als dem des in der Ausnehmung aufgenommenen Drahtseilendes versehen sein. Das hat den Vorteil eines kontinuierlichen Ueberganges des Metallquerschnittes des Verbindungsstückes in diesem Bereich auf den Metallquerschnitt des Verbindungsstückes im Bereich der genannten Verbindungsmittel. Zweckmässig kann dabei die Ausnehmung zur Aufnahme des Drahtseilendes einen kegelförmigen oder halbkugelförmigen oder ellipsoidförmigen Boden aufweisen.

Die Erfindung betrifft weiter ein Verfahren zur Herstellung eines Verbindungsstückes der eingangs genannten Art an einem Drahtseilende, das dadurch gekennzeichnet ist, dass ein Verbindungsstück-Rohling aus schwefelarmem Chrom-Nickel-Stahl mit äusseren Abmassen quer zu seiner Längsachse von weniger als 150% des Drahtseildurchmessers verwendet wird, der auf seiner einen Seite mit einer Ausnehmung mit einem näherungsweise dem Drahtseildurchmesser entsprechenden Durchmesser versehen ist und auf seiner anderen Seite einen für Verbindungsmittel vorgesehenen Bereich mit näherungsweise dem Drahtseildurchmesser entsprechendem Durchmesser und zwischen dem für die Verbindungsmittel vorgesehenen Bereich und dem mit der Ausnehmung versehenen Bereich einen Uebergangsbereich mit bis auf die äusseren Abmasse des Rohlings quer zu seiner Längsachse ansteigendem Durchmesser aufweist, dass das Drahtseilende in die Ausnehmung hineingesteckt wird und dass der Rohling danach durch plastische Verformung aus der Gruppe Kneten, Walzen, Aufrollen und Hämmern im Uebergangsbereich und dem mit der Ausnehmung versehenen Bereich in seinen äusseren Abmassen quer zu seiner Längsachse bis auf weniger als 110% des Drahtseildurchmessers reduziert wird, wobei sich mit der Reduktion der äusseren Abmasse des Rohlings quer zu seiner Längsachse eine Vergrösserung der Tiefe der Ausnehmung und der Länge des von der Ausnehmung aufgenommenen Drahtseilendes um bis zu 25 bis 50% und eine im wesentlichen formschlüssige Anpassung der Wand der Ausnehmung an die Struktur der Aussenfläche des von der Ausnehmung aufgenommenen Drahtseilendes ergibt.

Anhand der nachstehenden Figuren ist die Erfindung im folgenden an einem Ausführungsbeispiel näher erläutert. Es zeigen
- Fig. 1: Ein Ausführungsbeispiel eines Verbindungsstück-Rohlings sowie eines Drahtseilendes vor ihrer Vereinigung zu einem Verbindungsstück an einem Drahtseilende nach der Erfindung in Seitenansicht,
- Fig.2: Den in Fig. 1 gezeigten Verbindungsstück-Rohling mit in seine Ausnehmung eingestecktem Drahtseilende in Seitenansicht,
- Fig.3: Das sich nach der plastischen Verformung des in Fig. 2 gezeigten Verbindungsstück-Rohlings mit eingestecktem Drahtseilende ergebende Verbindungsstück an einem Drahtseilende nach der Erfindung in Seitenansicht.

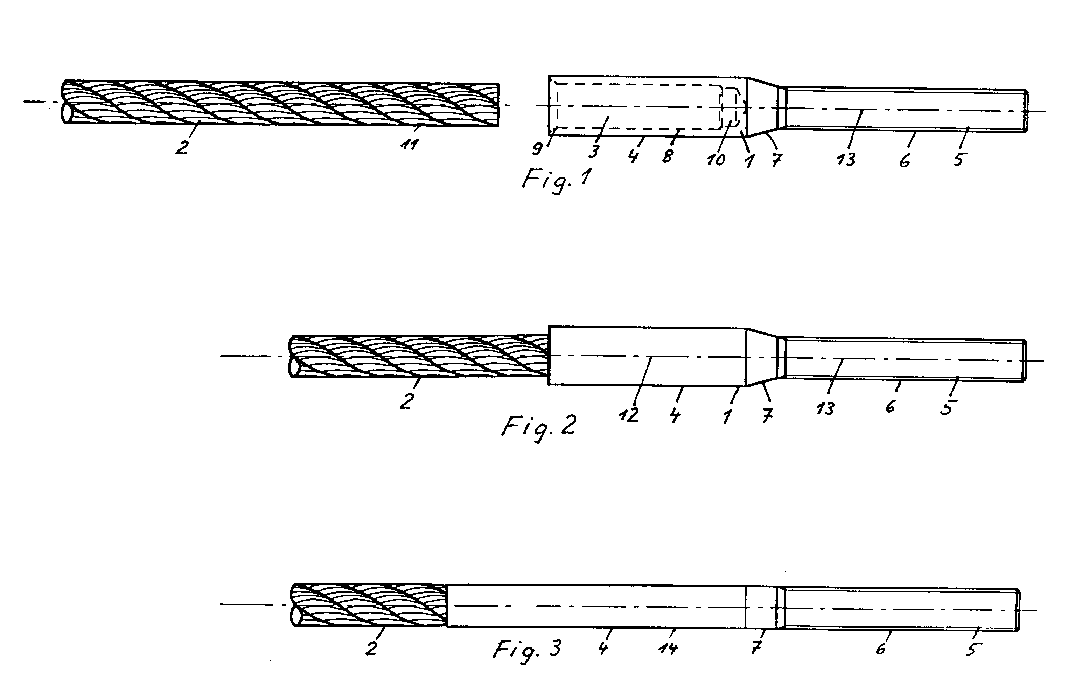

In Fig. 1 sind zunächst ein Verbindungsstück-Rohling 1 und ein Endstück eines Drahtseiles 2 vor ihrer Vereinigung zu einem Verbindungsstück an einem Drahtseilende gezeigt. Der Verbindungsstück-Rohling 1 weist einen mit einer Ausnehmung 3 vorgesehenen Bereich 4, einen für Verbindungsmittel 5 zur lösbaren Verbindung des Verbindungsstückes mit Mitteln zur Aufnahme von durch Längsspannungen im Drahtseil verursachten Zugkräften vorgesehenen Bereich 6 und einen Uebergangsbereich 7 zwischen dem für die Verbindungsmittel 5 vorgesehenen Bereich 6 und dem für die Ausnehmung 3 vorgesehenen Bereich 4 auf. Die genannten Verbindungsmittel bestehen im vorliegenden Fall aus einem Gewindebolzen 5 mit annähernd gleichem Aussendurchmesser wie dem Durchmesser des Drahtseiles 2. Die Ausnehmung 3 besteht im vorliegenden Fall aus einer zum Verbindungsstück-Rohling 1 koaxialen Bohrung 8 von näherungsweise gleichem Durchmesser wie dem des Drahtseiles 2, die an ihrer Oeffnung vorteilhaft zum leichten Einschieben des Endstückes des Drahtseiles 2 in die Ausnehmung 3 mit einer Fase 9 und am Bohrungsgrund mit einer Verlängerung 10 der Ausnehmung 3 von geringerem Durchmesser als dem des in der Ausnehmung 3 aufgenommenen Drahtseilendes 11 versehen ist.

Zur Herstellung eines Verbindungsstückes an einem Drahtseilende aus dem Verbindungsstück-Rohling 1 und dem Endstück des Drahtseiles 2 wird, wie in Fig. 2 gezeigt, das Endstück des Drahtseiles 2 mit seinem Drahtseilende 11 in die Ausnehmung 3 eingeschoben. Als Drahtseilende 11 ist in den vorliegenden Unterlagen der von der Ausnehmung 3 aufgenommene Teil des Endstückes des Drahtseiles 2 bezeichnet. Nach dem Einschieben des Drahtseilendes 11 in die Ausnehmung 3 wird der Verbindungsstück-Rohling 1 in seinem mit der Ausnehmung 3 versehenen Bereich 4 sowie dem Uebergangsbereich 7 durch sogenanntes Kneten mittels einer an sich bekannten zur plastischen Verformung vorgesehenen Einrichtung derart plastisch verformt, dass in diesen Bereichen 4 und 7 die äusseren Abmasse des Verbindungsstück-Rohlings 1 quer zur Achse 12 des Drahtseilendes 11 infolge der plastischen Verformung reduziert werden, bis sie mit einer Toleranz von weniger als 10% dem Durchmesser des Drahtseiles 2 entsprechen und vorzugsweise den gleichen Durchmesser wie der mit den Verbindungsmitteln versehene Bereich 6 aufweisen. Bei dieser Reduktion der äusseren Abmasse des Verbindungsstück-Rohlings 1 quer zu seiner Längsachse 13 ergibt sich infolge der plastischen Verformung eine Vergrösserung der Tiefe der Ausnehmung 3 und der Länge des von der Ausnehmung 3 aufgenommenen Drahtseilendes 11 um bis zu 25 bis 50%, vorzugsweise um bis zu 34 bis 37%, und eine im wesentlichen formschlüssige Anpassung der Wand der Ausnehmung 3 an die Struktur der Aussenfläche des von der Ausnehmung 3 aufgenommenen Drahtseilendes 11, so dass sich nach Beendigung der plastischen Verformung bzw. des Knetvorganges das in Fig. 3 gezeigte Ausführungsbeispiel eines erfindungsgemässen Verbindungsstückes an einem Drahtseilende ergibt.

In einer längeren Versuchsreihe wurden bei dem vorliegenden Verbindungsstück 14 an einem Drahtseilende 11 Durchmesserreduktionen des mit der Ausnehmung 3 versehenen Bereiches 4 sowie des Uebergangsbereiches 7 bis auf 103,8 bis 106,2%, durchschnittlich also bis auf 105% des Durchmessers des Drahtseiles 2 erreicht, wobei mit den so hergestellten Verbindungsstücken an einem Drahtseilende Bruchkräfte von in der Regel über 85% und im Durchschnitt über 90% und in Einzelfällen sogar von über 95% der minimalen Bruchkraft des Drahtseiles 2 erzielt werden konnten. Das erfindungsgemässe Verbindungsstück an einem Drahtseilende weist daher wesentlich günstigere Eigenschaften als die bekannten Verbindungsstücke der eingangs genannten Art auf.

## Patentansprüche

1. Metallisches Verbindungsstück (14) an einem Drahtseilende (11) zur Aufnahme von durch Längsspannungen im Drahtseil (2) verursachten Zugkräften mit äusseren Abmassen in Richtung quer zur verlängerten Achse (12) des Drahtseilendes (11), die im wesentlichen gleich dem Durchmesser des Drahtseiles (2) sind, wobei das Verbindungsstück (14) auf seiner dem Drahtseilende (11) zugewandten Seite mit einer Ausnehmung (3) zur Aufnahme des Drahtseilendes (11) und auf seiner vom Drahtseilende (11) abgewandten Seite mit Verbindungsmitteln (5) zur lösbaren Verbindung des Verbindungsstückes (14) mit Mitteln zur Aufnahme von durch Längsspannungen im Drahtseil (2) verursachten Zugkräften versehen ist, dadurch gekennzeichnet, dass das Verbindungsstück (14) mindestens in seinem mit der Ausnehmung (3) versehenen Bereich (4) derart plastisch verformt ist, dass die äusseren Abmasse des Verbindungsstückes (14) in diesem Bereich (4) quer zur Achse (12) des Drahtseilendes (11) infolge der plastischen Verformung so weit reduziert sind, dass sie mit einer Toleranz von weniger als 10% dem Durchmesser des Drahtseiles (2) entsprechen, und dass weiter die Wand der Ausnehmung (3) mindestens auf einem Teil ihrer Länge infolge der plastischen Verformung eine der Aussenfläche des von der Ausnehmung (3) aufgenommenen Drahtseilendes (11) entsprechende Struktur aufweist.

2. Verbindungsstück nach Anspruch 1, dadurch gekennzeichnet, dass die Wand der Ausnehmung (3) auf dem überwiegenden Teil ihrer Länge infolge der plastischen Verformung eine der Aussenfläche des von der Ausnehmung (3) aufgenommenen Drahtseilendes (11) entsprechende Struktur aufweist.

3. Verbindungsstück nach Anspruch 1 oder 2, dadurch gekennzeichnet, dass die Wand der Ausnehmung (3) infolge der plastischen Verformung weitgehend formschlüssig an der Aussenfläche des Drahtseilendes (11) anliegt.

4. Verbindungsstück nach einem der Ansprüche 1 bis 3, dadurch gekennzeichnet, dass die äusseren Abmasse des Verbindungsstückes (14) in Richtung quer zur verlängerten Achse (12) des Drahtseilendes (11) mit einer Toleranz von weniger als 8%, zweckmässig von weniger als 6% und vorzugsweise von weniger als 4%, dem Durchmesser des Drahtseiles (2) entsprechen.

5. Verbindungsstück nach einem der Ansprüche 1 bis 4, dadurch gekennzeichnet, dass das Verbindungsstück (14) wenigstens über die Gesamtlänge der Ausnehmung (3) und vorzugsweise darüber hinaus über wenigstens einen Teil eines Uebergangsbereiches (7) zwischen dem mit der Ausnehmung (3) und dem mit den genannten Verbindungsmitteln (5) versehenen Teil des Verbindungsstückes (14) plastisch verformt ist.

6. Verbindungsstück nach einem der Ansprüche 1 bis 5, dadurch gekennzeichnet, dass der Metallquerschnitt des Verbindungsstückes (14) an der Stelle seines Minimums mindestens 90%, vorzugsweise über 95% des Metallquerschnittes des Drahtseiles (2) beträgt.

7. Verbindungsstück nach einem der Ansprüche 1 bis 6, dadurch gekennzeichnet, dass die minimale Bruchkraft des Verbindungsstückes (14) über 85%, zweckmässig über 90% und vorzugsweise über 95% der minimalen Bruchkraft des Drahtseiles (2) beträgt.

8. Verbindungsstück nach einem der Ansprüche 1 bis 7, dadurch gekennzeichnet, dass das Verbindungsstück (14) aus Edelstahl, vorzugsweise aus Chrom-Nickel-Stahl, besteht.

9. Verbindungsstück nach Anspruch 8, dadurch gekennzeichnet, dass der Edelstahl einen Chromgehalt von 15 bis 25 Gew.%, vorzugsweise von 17 bis 19 Gew.%, einen Nikkelgehalt von 5 bis 15 Gew.%, vorzugsweise von 8 bis 11 Gew.%, und einen Schwefelgehalt von unter 0,036 Gew.%, vorzugsweise im Bereich von 0,015 bis 0,03 Gew.%, hat und vorzugsweise einen oder mehrere weitere Legierungsbestandteile aus der Gruppe Silizium, Mangan, Molubdän und Vanadium mit Gehalten im Bereich von 0,5 bis 5 Gew.% aufweist.

10. Verbindungsstück nach einem der Ansprüche 1 bis 9, dadurch gekennzeichnet, dass der Durchmesser des von der Ausnehmung (3) aufgenommenen Drahtseilendes (11) infolge eines verringerten Luftvolumens pro Längeneinheit geringer, zweckmässig um über 5% und vorzugsweise um über 10% geringer, als der Durchmesser des Drahtseiles (2) ist.

11. Verbindungsstück nach einem der Ansprüche 1 bis 10, dadurch gekennzeichnet, dass die Ausnehmung (3) im Anschluss an ihren das Drahtseilende (11) aufnehmenden Teil mit einer Verlängerung (10) von geringerem Durchmesser als dem des in der Ausnehmung (3) aufgenommenen Drahtseilendes (11) versehen ist.

12. Verbindungsstück nach einem der Ansprüche 1 bis 11, dadurch gekennzeichnet, dass die Ausnehmung (3) zur Aufnahme des Drahtseilendes (11) einen kegelförmigen oder halbkugelförmigen oder ellipsoidförmigen Boden aufweist.

13. Verfahren zur Herstellung eines Verbindungsstückes (14) an einem Drahtseilende (11) nach Anspruch 1, dadurch gekennzeichnet, dass ein Verbindungsstück-Rohling (1) aus schwefelarmem Chrom-Nickel-Stahl mit äusseren Abmassen quer zu seiner Längsachse (13) von weniger als 150% des Drahtseildurchmessers verwendet wird, der auf seiner einen Seite mit einer Ausnehmung (3) mit einem näherungsweise dem Drahtseildurchmesser entsprechenden Durchmesser versehen ist und auf seiner anderen Seite einen für Verbindungsmittel (5) vorgesehenen Bereich (6) mit näherungsweise dem Drahtseildurchmesser entsprechendem Durchmesser und zwischen dem für die Verbindungsmittel (5) vorgesehenen Bereich (6) und dem mit der Ausnehmung (3) versehenen Bereich (4) einen Uebergangsbereich (7) mit bis auf die äusseren Abmasse des Rohlings (1) quer zu seiner Längsachse (13) ansteigendem Durchmesser aufweist, dass das Drahtseilende (11) in die Ausnehmung (3) hineingesteckt wird und dass der Rohling (1) danach durch plastische Verformung aus der Gruppe Kneten, Walzen, Aufrollen und Hämmern im Uebergangsbereich (7) und dem mit der Ausnehmung (3) versehenen Bereich (4) in seinen äusseren Abmassen quer zu seiner Längsachse bis auf weniger als 110% des Drahtseildurchmessers reduziert wird, wobei sich mit der Reduktion der äusseren Abmasse des Rohlings (1) quer zu seiner Längsachse (13) eine Vergrösserung der Tiefe der Ausnehmung (3) und der Länge des von der Ausnehmung (3) aufgenommenen Drahtseilendes (11) um bis zu 25 bis 50% und eine im wesentlichen formschlüssige Anpassung der Wand der Ausnehmung (3) an die Struktur der Aussenfläche des von der Ausnehmung (3) aufgenommenen Drahtseilendes (11) ergibt.

## Claims

1. Metallic connection piece (14) at a wire-rope end (11) for taking up tensile forces caused by longitudinal stresses in the wire rope (2), having external dimensions in the direction transverse to the extended axis (12) of the wire-rope end (11) which are substantially equal to the diameter of the wire rope (2), the connection piece (14) being provided on its side facing the wire-rope end (11) with a recess (3) for receiving the wire-rope end (11) and on its side facing away from the wire-rope end (11) with connection means (5) for the detachable connection of the connection piece (14) to means for taking up tensile forces caused by longitudinal stresses in the wire rope (2), characterised in that the connection piece (14) is plastically deformed, at least in its region (4) provided with the recess (3), in such a way that the external dimensions of the connection piece (14) in this region (4) transverse to the axis (12) of the wire-rope end (11) are reduced, owing to the plastic deformation, to such an extent that they correspond, with a tolerance of less than 10%, to the diameter of the wire rope (2), and in that, furthermore, the wall of the recess (3) has, at least over a part of its length, owing to the plastic deformation, a structure corresponding to the outer surface of the wire-rope end (11) received by the recess (3).

2. Connection piece according to Claim 1, characterised in that the wall of the recess (3) has, over the major part of its length, owing to the plastic deformation, a structure corresponding to the outer surface of the wire-rope end (11) received by the recess (3).

3. Connection piece according to Claim 1 or 2, characterised in that the wall of the recess (3) bears, owing to the plastic deformation, in a largely positivelocking manner against the outer surface of the wire-rope end (11).

4. Connection piece according to one of Claims 1 to 3, characterised in that the external dimensions of the connection piece (14) in the direction transverse to the extended axis (12) of the wire-rope end (11) correspond, with a tolerance of less than 8%, expediently of less than 6% and preferably of less than 4%, to the diameter of the wire rope (2).

5. Connection piece according to one of Claims 1 to 4, characterised in that the connection piece (14) is plastically deformed at least over the entire length of the recess (3) and preferably, in addition, over at least a part of a transition region (7) between that part of the connection piece (14) which is provided with the recess (3) and that part thereof which is provided with the said connection means (5).

6. Connection piece according to one of Claims 1 to 5, characterised in that the metal cross-section of the connection piece (14), at the location of its minimum, amounts to at least 90%, preferably more than 95%, of the metal cross-section of the wire rope (2).

7. Connection piece according to one of Claims 1 to 6, characterised in that the minimum breaking force of the connection piece (14) amounts to more than 85%, expediently more than 90% and preferably more than 95%, of the minimum breaking force of the wire rope (2).

8. Connection piece according to one of Claims 1 to 7, characterised in that the connection piece (14) consists of high-grade steel, preferably of nickel-chromium steel.

9. Connection piece according to Claim 8, characterised in that the high-grade steel has a chromium content of 15 to 25% by weight, preferably of 17 to 19% by weight, a nickel content of 5 to 15% by weight, preferably of 8 to 11% by weight, and a sulphur content of less than 0.036% by weight, preferably in the range from 0.015 to 0.03% by weight, and preferably contains one or more further alloying constituents from the group consisting of silicon, manganese, molybdenum and vanadium having contents in the range from 0.5 to 5% by weight.

10. Connection piece according to one of Claims 1 to 9, characterised in that the diameter of the wire-rope end (11) received by the recess (3) is less, expediently by more than 5% and preferably by more than 10% less, than the diameter of the wire rope (2), owing to a reduced air volume per unit of length.

11. Connection piece according to one of Claims 1 to 10, characterised in that the recess (3), adjoining its part which receives the wire-rope end (11), is provided with an extension (10) of smaller diameter than the wire-rope end (11) received in the recess (3).

12. Connection piece according to one of Claims 1 to 11, characterised in that the recess (3) has a conical or hemispherical or ellipsoidal base for receiving the wire-rope end (11).

13. Method of producing a connection piece (14) at a wire-rope end (11) according to Claim 1, characterised in that a connection-piece blank (1) of low-sulphur nickel-chromium steel having external dimensions transverse to its longitudinal axis (13) of less than 150% of the diameter of the wire rope is used, which is provided on its one side with a recess (3) having a diameter approximately corresponding to the diameter of the wire rope and has on its other side a region (6), provided for connection means (5), having a diameter approximately corresponding to the diameter of the wire rope and, between the region (6) provided for the connection means (5) and the region (4) provided with the recess (3), has a transition region (7) having a diameter which increases up to the external dimensions of the blank (1) transverse to its longitudinal axis (13), in that the wire-rope end (11) is inserted into the recess (3), and in that the blank (1) is subsequently reduced, in the transition region (7) and the region (4) provided with the recess (3), in its external dimensions transverse to its longitudinal axis down to less than 110% of the diameter of the wire rope by plastic deformation, from the group consisting of squeezing, rolling, rolling on and hammering, the reduction of the external dimensions of the blank (1) transverse to its longitudinal axis (13) resulting in an enlargement of the depth of the recess (3) and of the length of the wire-rope end (11) received by the recess (3) by up to 25 to 50% and a substantially positive-locking adaptation of the wall of the recess (3) to the structure of the outer surface of the wire-rope end (11) received by the recess (3).

## Revendications

1. Pièce de liaison métallique (14) à une extrémité (11) de câble métallique pour recevoir des forces de traction produites par des efforts longitudinaux dans le câble métallique (2), avec des dimensions extérieures dans la direction transversalement à l'axe prolongé (12) de l'extrémité (11) de câble métallique qui sont essentiellement égaux au diamètre du câble métallique (2), la pièce de liaison (14), sur son côté orienté vers l'extrémité (11) de câble métallique, étant pourvu d'un évidement (3) pour recevoir l'extrémité (11) de câble métallique et sur son côté éloigné de l'extrémité (11) de câble métallique de moyens de liaison (5) en vue d'une liaison relâchable de la pièce de liaison (14) avec des moyens pour recevoir des forces de traction provoquées par des efforts longitudinaux dans le câble métallique (2), caractérisée en ce que la pièce de liaison (14) est déformée plastiquement au moins dans sa zone (4) pourvue de l'évidement (3) de telle sorte que les dimensions extérieures de la pièce de liaison (14) soient diminuées dans cette zone (4) transversalement à l'axe (12) de l'extrémité (11) de câble métallique par suite de la déformation plastique suffisamment pour qu'elles correspondent avec une tolérance inférieure à 10% au diamètre du câble métallique (2) et en ce qu'en outre, la paroi de l'évidement (3) présente au moins sur une partie de sa longueur, par suite de la déformation plastique, une structure correspondant à la surface extérieure de l'extrémité (11) de câble métallique reçue par l'évidement (3).

2. Pièce de liaison selon la revendication 1 caractérisée en ce que la paroi de l'évidement (3) présente sur la plus grande partie de sa longueur, par suite de la déformation plastique, une structure correspondant à la surface extérieure de l'extrémité de câble métallique (11) reçue par l'évidement.

3. Pièce de liaison selon la revendication 1 ou 2, caractérisée en ce que la paroi de l'évidement (3), par suite de la déformation plastique, s'applique dans une grande mesure par concordance des formes à la surface extérieure de l'extrémité (11) de câble métallique.

4. Pièce de liaison selon l'une des revendications 1 à 3, caractérisée en ce que les dimensions extérieures de la pièce de liaison (14), dans la direction transversalement à l'axe prolongé (12) de l'extrémité (11) de câble métallique correspondent avec une tolérance inférieure à 8%, de manière appropriée inférieure à 6% et de préférence inférieure à 4% au diamètre du câble métallique (2).

5. Pièce de liaison selon l'une des revendications 1 à 4, caractérisée en ce que la pièce de liaison (14) est déformée plastiquement au moins sur la longueur totale de l'évidement (3) et de préférence au delà de celle-ci sur au moins une partie d'une zone de transition (7) entre la partie de la pièce de liaison (14) pourvue de l'évidement (3) et des moyens de liaison précités (5).

6. Pièce de liaison selon l'une des revendications 1 à 5, caractérisée en ce que la section transversale métallique de la pièce de liaison (14) représente à l'endroit de son minimum au moins 90% , de préférence plus que 95% de la section transversale métallique du câble métallique (2).

7. Pièce de liaison selon l'une des revendications 1 à 6, caractérisée en ce que la force de rupture minimale de la pièce de liaison (14) est supérieure à 85%, de manière appropriée supérieure à 90% et de préférence supérieure à 95% de la force de rupture minimale du câble métallique (2).

8. Pièce de liaison selon l'une des revendications 1 à 7, caractérisée en ce que la pièce de liaison (14) est réalisée en acier fin, de préférence en acier au nickel-chrome.

9. Pièce de liaison selon la revendication 8, caractérisée en ce que l'acier fin a une teneur en chrome de 15 à 25% en poids, de préférence de 17 à 19% en poids, une teneur en nickel de 5 à 15% en poids, de préférence de 8 à 11% en poids, et une teneur en soufre inférieure à 0,036% en poids, de préférence comprise entre 0,015 et 0,03% en poids et présente de préférence un ou plusieurs composants d'alliage additionnels du groupe silicium, manganèse, molybdène et vanadium avec des teneurs comprises entre 0,5 et 5% en poids.

10. Pièce de liaison selon l'une des revendications 1 à 9, caractérisée en ce que le diamètre de l'extrémité (11) de câble métallique reçue par l'évidement (3), par suite d'un volume d'air plus réduit par unité de longueur est inférieur, de manière appropriée de plus de 5% et de préférence de plus de 10%, au diamètre du câble métallique (2).

11. Pièce de liaison selon l'une des revendications 1 à 10, caractérisée en ce que l'évidement (3), à la suite de sa partie recevant l'extrémité (11) du câble métallique, est pourvu d'un prolongement (10) d'un plus petit diamètre que celui de l'extrémité (11) de câble métallique reçue dans l'évidement (3).

12. Pièce de liaison selon l'une des revendications 1 à 11, caractérisée en ce que l'évidement (3), pour la réception de l'extrémité (11) de câble métallique, présente un fond conique ou hémisphérique ou en forme d'éllipse.

13. Procédé de fabrication d'une pièce de liaison (14) à une extrémité de câble métallique (11) selon la revendication 1, caractérisé en ce qu'on utilise une ébauche de pièce de liaison (1) en un acier au nickel-chrome pauvre en soufre ayant des dimensions extérieures transversalement à son axe longitudinal (13) qui sont inférieures à 150% du diamètre de câble métallique, qui est pourvue sur un côté d'un évidement (3) d'un diamètre correspondant approximativement au diamètre du câble métallique et qui présente sur son autre côté une zone (6) prévue pour des moyens de liaison (5) et d'un diamètre correspondant approximativement au diamètre du câble métallique, et entre la zone (6) prévue pour les moyens de liaison (5) et la zone (4) pourvue de l'évidement (3), une zone de transition (7) d'un diamètre augmentant jusqu'aux dimensions extérieures de l'ébauche (1) transversalement à son axe longitudinal (13), qu'on place l'extrémité de câble métallique (11) dans l'évidement (3) et que l'ébauche (1) est réduite ensuite par déformation plastique du groupe malaxage, laminage et martelage dans la zone de transition (7) et la zone (4) pourvue de l'évidement (3) dans ses dimensions extérieures transversalement à son axe longitudinal jusqu'à moins de 110% du diamètre du câble métallique, et on obtient avec la diminution des dimensions extérieures de l'ébauche (1) transversalement à son axe longitudinal (13) un agrandissement de la profondeur de l'évidement (3) et de la longueur de l'extrémité de câble métallique (11) reçue par l'évidement (3) allant jusqu'à 25 à 50%, et une adaptation essentiellement par concordance des formes de la paroi de l'évidement (3) à la structure de la surface extérieure de l'extrémité de câble métallique (11) reçue par l'évidement (3).
